(19) Europäisches Patentamt / European Patent Office / Office européen des brevets

(11) **EP 4 773 312 A1**

(12) **EUROPEAN PATENT APPLICATION**
published in accordance with Art. 153(4) EPC

(43) Date of publication:
08.07.2026 Bulletin 2026/28

(21) Application number: 24859505.0

(22) Date of filing: 19.08.2024

(51) International Patent Classification (IPC):
$H01M\ 10/058$ (2010.01)  $H01M\ 4/13$ (2010.01)
$H01M\ 4/133$ (2010.01)  $H01M\ 4/36$ (2006.01)
$H01M\ 4/38$ (2006.01)  $H01M\ 4/62$ (2006.01)

(52) Cooperative Patent Classification (CPC):
H01M 4/13; H01M 4/133; H01M 4/36; H01M 4/38;
H01M 4/62; H01M 10/058; Y02E 60/10; Y02P 70/50

(86) International application number:
PCT/JP2024/029241

(87) International publication number:
WO 2025/047470 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 JP 2023140994

(71) Applicant: Panasonic Intellectual Property
Management Co., Ltd.
Kadoma-shi, Osaka 571-0057 (JP)

(72) Inventors:
• HARADA, Tomohiro
Kadoma-shi, Osaka 571-0057 (JP)
• HAMANAKA, Keiichi
Kadoma-shi, Osaka 571-0057 (JP)
• OKAZAKI, Tomohisa
Kadoma-shi, Osaka 571-0057 (JP)

(74) Representative: Novagraaf International SA
Chemin de l'Echo 3
1213 Onex, Geneva (CH)

(54) **NONAQUEOUS ELECTROLYTE SECONDARY BATTERY**

(57) Provided is a nonaqueous electrolyte secondary battery which achieves both high output and good quick charge cycle characteristics. In the nonaqueous electrolyte secondary battery according to the present disclosure, a positive electrode mixture layer contains a positive electrode active material, single-walled carbon nanotubes, and multi-walled carbon nanotubes, and a negative electrode mixture layer contains a first negative electrode mixture layer that is disposed on the surface of a negative electrode and a second negative electrode mixture layer that is disposed between the first negative electrode mixture layer and a negative electrode core body. The ratio P1 of coated graphite to the total mass of graphite in the first negative electrode mixture layer and the ratio P2 of coated graphite to the total mass of graphite in the second negative electrode mixture layer satisfy the relationship P1 > P2. The void fraction Vc of the positive electrode mixture layer during discharge and the void fraction Va of the negative electrode mixture layer during discharge satisfy the relationship Va - Vc < 13%.

EP 4 773 312 A1

Figure1

**Description**

TECHNICAL FIELD

The present disclosure relates to a non-aqueous electrolyte secondary battery.

BACKGROUND

In recent years, non-aqueous electrolyte secondary batteries such as lithium ion batteries are used for various usages such as vehicle-mounted usage, electricity storage usage, and the like. In particular, for the vehicle-mounted usage, in addition to a quick charge performance, maintaining a high battery capacity even after repetitions of charging and discharging is also desired. Patent Literatures 1 to 4 disclose techniques related to a negative electrode, targeted to improving the quick charge cycle characteristics.

CITATION LIST

PATENT LITERATURE

Patent Literature 1: JP 6108166 B
Patent Literature 2: JP 6959010 B
Patent Literature 3: JP 7136017 B
Patent Literature 4: JP 7246810 B

SUMMARY

Required characteristics for non-aqueous electrolyte secondary batteries have been increasing year after year, and these requirements cannot be satisfied by the techniques of Patent Literatures 1 to 4. In addition, in a non-aqueous electrolyte secondary battery, improvement of an output is an important issue. The techniques of Patent Literatures 1 to 4 cannot sufficiently address a problem of achieving both high output and superior quick charge cycle characteristics, and there remains large room of improvement.

An advantage of the present disclosure lies in provision of a non-aqueous electrolyte secondary battery which achieves both high output and superior quick charge cycle characteristics.

According to one aspect of the present disclosure, there is provided a non-aqueous electrolyte secondary battery including: a positive electrode; a negative electrode; a separator; and a non-aqueous electrolyte, wherein the positive electrode includes a positive electrode core, and a positive electrode mixture layer disposed on a surface of the positive electrode core, the positive electrode mixture layer contains a positive electrode active material, single-walled carbon nanotubes, and multi-walled carbon nanotubes, the negative electrode includes a negative electrode core, and a negative electrode mixture layer disposed on a surface of the negative electrode core, the negative electrode mixture layer includes a first negative electrode mixture layer disposed on a surface of the negative electrode, and a second negative electrode mixture layer disposed between the first negative electrode mixture layer and the negative electrode core, the negative electrode mixture layer contains graphite, and a part of the graphite is coated graphite in which a surface of the graphite is coated with amorphous graphite, a ratio P1 of the coated graphite with respect to a total mass of the graphite in the first negative electrode mixture layer and a ratio P2 of the coated graphite with respect to a total mass of the graphite in the second negative electrode mixture layer satisfy a relationship P1 > P2, and a void fraction Vc of the positive electrode mixture layer at a time of discharge and a void fraction Va of the negative electrode mixture layer at a time of discharge satisfy a relationship Va - Vc < 13%.

A non-aqueous electrolyte secondary battery according to an aspect of the present disclosure has high output and has superior quick charge cycle characteristics.

BRIEF DESCRIPTION OF DRAWINGS

FIG. 1 is a cross-sectional diagram of a non-aqueous electrolyte secondary battery according to an embodiment of the present disclosure.
FIG. 2 is a cross-sectional diagram of a negative electrode according to an embodiment of the present disclosure.

DESCRIPTION OF EMBODIMENTS

After extensive studies, the present inventors have found that it is not possible to obtain a non-aqueous electrolyte secondary battery which achieves both high output and superior quick charge cycle characteristics even when the negative electrodes of Patent Literatures 1 to 4 are used. In recent years, the required characteristics for the non-aqueous electrolyte secondary batteries have increased, and the requirements cannot be satisfied by the techniques of Patent Literatures 1 to 4. In addition, while improvement of the output of the non-aqueous electrolyte secondary battery is an important issue, Patent Literatures 1 to 4 do not sufficiently review improvements of the output of the battery.

After further review, the present inventors have succeeded in obtaining a non-aqueous electrolyte secondary battery which achieves both high output and superior quick charge cycle characteristics not only by reviewing the structure of the negative electrode, but also by optimizing the structures of both the positive electrode and the negative electrode. In the positive electrode mixture layer, both of single-walled carbon nanotubes and multi-walled carbon nanotubes are contained as conductive agents, and void fractions Vc and Va of the positive electrode mixture layer and the negative electrode mixture layer are set to be relatively large at the time of discharge, so as to satisfy a relationship Va - Vc < 13%. With this configuration, while the non-aqueous electrolyte discharged from the negative electrode during charging can be absorbed in the positive electrode mixture layer, an electrically conductive path is secured. In the negative electrode mixture layer, a multilayer structure is employed, and a ratio of coated graphite contained in a negative electrode mixture layer on a surface side is set higher than a ratio of the coated graphite contained in a second negative electrode mixture layer on a core side. With this configuration, although the first negative electrode mixture layer has a high void fraction, an electrically conductive path is secured. The coated graphite has higher electrical conductivity in comparison to normal graphite, and is harder than the normal graphite. Because the first negative electrode mixture layer contains the coated graphite in a higher ratio in comparison to the second negative electrode mixture layer, the graphite tends to be not easily broken during a rolling process performed when the negative electrode is produced, and has a higher void fraction. On the other hand, the second negative electrode mixture layer has a lower void fraction in comparison to the first negative electrode mixture layer, and contributes to maintaining the battery capacity.

A non-aqueous electrolyte secondary battery according to an embodiment of the present disclosure will now be described in detail with reference to the drawings. Configurations obtained by selectively combining constituting elements of a plurality of embodiments and alternative configurations described below are within the scope of the present disclosure.

In the following, a circular cylindrical battery in which an electrode assembly 14 of a wound type is housed in a housing can 16 having a circular cylindrical shape with a bottom will be exemplified as the non-aqueous electrolyte secondary battery, but the housing element of the battery is not limited to the housing can of the circular cylindrical shape. The non-aqueous electrolyte secondary battery according to the present disclosure may alternatively be, for example, a polygonal battery having a polygonal housing can, a coin-shape battery having a coin-shape housing can, or a pouch-type battery having a housing element formed from a laminated sheet including a metal layer and a resin layer. The electrode assembly is not limited to the wound type, and the electrode assembly may alternatively be a layered-type electrode assembly in which a plurality of positive electrodes and a plurality of negative electrodes are alternatively layered with separators therebetween.

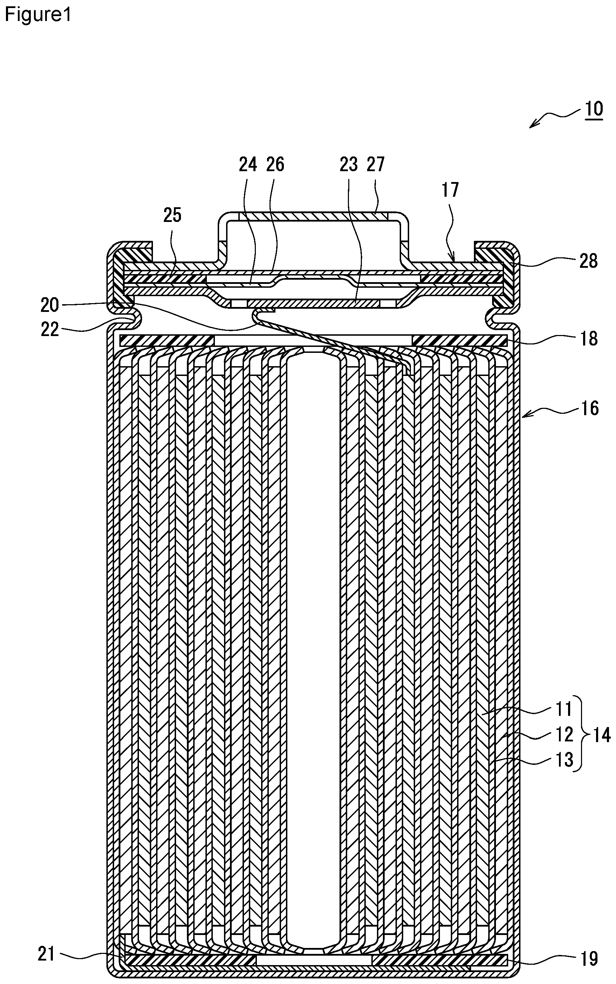

FIG. 1 is a cross-sectional diagram of a non-aqueous electrolyte secondary battery 10 according to an embodiment of the present disclosure. As illustrated in FIG. 1, the non-aqueous electrolyte secondary battery 10 comprises the electrode assembly 14 of a wound type, a non-aqueous electrolyte, and a housing can 16 which houses the electrode assembly 14 and the non-aqueous electrolyte. The electrode assembly 14 comprises a positive electrode 11, a negative electrode 12, and a separator 13, and has a wound structure in which the positive electrode 11 and the negative electrode 12 are wound in a spiral shape with the separator 13 therebetween. A diameter D of the electrode assembly 14 and a height H of the electrode assembly 14, for example, satisfy a condition $H/D \geq 2$. As H/D becomes larger, distribution of the non-aqueous electrolyte included in the positive electrode 11 and the negative electrode 12 becomes more non-uniform, and quick charge cycle characteristics tend to be degraded. Thus, the advantage of the secondary battery according to the present disclosure to be described later becomes more significant for larger H/D. The housing can 16 is a metal container having a circular cylindrical shape with a bottom and having one end side in an axial direction opened, and the opening of the housing can 16 is blocked by a sealing assembly 17. In the following, for the convenience of the description, the side of the sealing assembly 17 of the battery will be referred to as an "upper side", and the side of the bottom of the housing can 16 will be referred to as a "lower side".

The non-aqueous electrolyte has lithium ion conductivity. The non-aqueous electrolyte includes a non-aqueous solvent and an electrolyte salt dissolved in the non-aqueous solvent. For the non-aqueous solvent, for example, esters, ethers, nitriles, amides, or a mixture solvent of two or more of these solvents may be employed. Examples of the non-aqueous solvent include ethylene carbonate (EC), ethylmethyl carbonate (EMC), dimethyl carbonate (DMC), diethyl carbonate (DEC), and a mixture solvent of these solvents. The non-aqueous solvent may include a halogen-substituted product in which at least a part of hydrogens of the solvent described above is substituted with a halogen atom such as fluorine (for example, fluoroethylene carbonate or the like). For the electrolyte salt, for example, a lithium salt such as $LiPF_6$

is employed.

The positive electrode 11, the negative electrode 12, and the separator 13 forming the electrode assembly 14 are each a band-shaped, elongated member, and are wound in the spiral shape, so as to be alternately layered in a radial direction of the electrode assembly 14. The negative electrode 12 is formed in a size slightly larger than the positive electrode 11 in order to prevent precipitation of lithium. That is, the negative electrode 12 is formed to be longer in a length direction and in a width direction than the positive electrode 11. The separator 13 is formed in a size slightly larger at least than the positive electrode 11, and two separators 13 are disposed, for example, to sandwich the positive electrode 11. The electrode assembly 14 comprises a positive electrode lead 20 connected to the positive electrode 11 by welding or the like, and a negative electrode lead 21 connected to the negative electrode 12 by welding or the like.

Insulating plates 18 and 19 are disposed respective above and below the electrode assembly 14. In the illustrated example structure of FIG. 1, the positive electrode lead 20 extends through a through hole of the insulating plate 18 toward the side of the sealing assembly 17, and the negative electrode lead 21 extends to the side of the bottom of the housing can 16 through an outer side of the insulating plate 19. The positive electrode lead 20 is connected to a lower surface of an internal terminal plate 23 of the sealing assembly 17 by welding or the like, and a cap 27 which is a top plate of the sealing assembly 17 electrically connected to the internal terminal plate 23 serves as a positive electrode terminal. The negative electrode lead 21 is connected to an inner surface of the bottom of the housing can 16 by welding or the like, and the housing can 16 serves as a negative electrode terminal.

A gasket 28 is provided between the housing can 16 and the sealing assembly 17, so as to secure hermiticity inside the battery. The housing can 16 has a groove portion 22 in which a part of a side surface portion is projected toward an inner side, and which supports the sealing assembly 17. The groove portion 22 is desirably formed in an annular shape along a circumferential direction of the housing can 16, and supports the sealing assembly 17 with the upper surface thereof. The sealing assembly 17 is fixed at an upper part of the housing can 16 by the groove portion 22 and an opening end of the housing can 16 crimped with respect to the sealing assembly 17.

The sealing assembly 17 has a structure in which the internal terminal plate 23, a lower vent member 24, an insulating member 25, an upper vent member 26, and the cap 27 are layered in this order from the side of the electrode assembly 14. The members of the sealing assembly 17 have, for example, a circular disk shape or a ring shape, and members other than the insulating member 25 are electrically connected to each other. The lower vent member 24 and the upper vent member 26 are connected to each other at respective center parts, and the insulating member 25 interposes between peripheral parts of the vent members. When an internal pressure of the battery increases due to abnormal heat generation, the lower vent member 24 deforms to press the upper vent member 26 upward toward the cap 27 and ruptures, and a current path between the lower vent member 24 and the upper vent member 26 is shut out. When the internal pressure further increases, the upper vent member 26 ruptures, and gas is exhausted from an opening of the cap 27.

The positive electrode 11, the negative electrode 12, and the separator 13 forming the electrode assembly 14 will now be described in detail.

[Positive Electrode]

The positive electrode 11 comprises, for example, a positive electrode core and a positive electrode mixture layer disposed on a surface of the positive electrode core. For the positive electrode core, there may be employed a foil of a metal which is stable within a potential range of the positive electrode 11 such as aluminum, a film on a surface of which the metal is disposed, or the like. The positive electrode mixture layer contains, for example, a positive electrode active material, a conductive agent, and a binder, and is desirably provided on both surfaces of the positive electrode core other than a portion to which the positive electrode lead 20 is connected. The positive electrode 11 can be produced, for example, by applying a positive electrode mixture slurry including the positive electrode active material, the conductive agent, and the binder on surfaces of the positive electrode core, drying the applied film, and compressing the dried film, to thereby form the positive electrode mixture layers on both surfaces of the positive electrode core.

As the positive electrode active material contained in the positive electrode mixture layer 31, there may be exemplified a lithium-containing composite oxide having a layered rock salt-type structure. As the layered rock salt-type structure of the lithium-containing composite oxide, for example, there may be exemplified a layered rock salt-type structure belonging to a space group R-3m, and a layered rock salt-type structure belonging to a space group C2/m. From the viewpoint of higher capacity and stability of the crystal structure, the lithium-containing composite oxide desirably has the layered rock salty-type structure belonging to the space group R-3m.

The lithium-containing composite oxide is, for example, a secondary particle formed by aggregation of a plurality of primary particles. A volume-based median diameter (D50) of the composite oxide is not particularly limited, and, as an example, is greater than or equal to 3 $\mu$m and less than or equal to 30 $\mu$m, or is desirably greater than or equal to 5 $\mu$m and less than or equal to 25 $\mu$m. When the composite oxide is the secondary particle formed by aggregation of primary particles, D50 of the composite oxide refers to D50 of the secondary particle. D50 refers to a particle diameter at which an accumulation of frequencies in a volume-based granularity distribution reaches 50% from the lower side, and is also called a middle size. The granularity distribution of the composite oxide can be measured using a granularity distribution measurement apparatus of a laser diffraction type (for example, MT3000II manufactured by MicrotracBEL corporation), and using water as a dispersion medium (this is similarly applicable to the case of the negative electrode active material).

An average particle diameter of the primary particles forming the lithium-containing composite oxide is, for example, greater than or equal to 0.05 $\mu$m and less than or equal to 1 $\mu$m. The average particle diameter of the primary particles is calculated by averaging diameters of circumscribing circles of primary particles extracted through analysis of a scanning electron microscope (SEM) image of a cross section of the secondary particle.

The lithium-containing composite oxide is a composite oxide containing, in addition to Li, a metal element such as Ni, Co, Al, Mn, and the like. The metal element forming the lithium-containing composite oxide is, for example, Ni and M (wherein M is at least one element selected from the group consisting of Co, Al, Mn, Fe, Ti, Si, Nb, Mo, W, and Zn). Of these elements, the lithium-containing composite oxide desirably contains at least one element selected from Ni, Co, Al, and Mn. Examples of the desirable composite oxide include a composite oxide containing Ni, Co, and Al, and a composite oxide containing Ni, Co, and Mn.

The lithium-containing composite oxide desirably contains Ni in an amount of greater than or equal to 80 mol% with respect to a total number of moles of metal elements other than Li, from the viewpoint of higher capacity or the like. The content of Ni may be greater than or equal to 87 mol%, or greater than or equal to 90 mol% with respect to the total number of moles of the metal elements other than Li. An upper limit of the Ni content is, for example, 95 mol%.

The lithium-containing composite oxide is, for example, a composite oxide represented by a general formula $Li_aNi_xM_yO_{2-b}$ (wherein $0.95 \leq a \leq 1.2$, $0.80 \leq x \leq 0.95$, $0.05 \leq y \leq 0.20$, $0 \leq b \leq 0.05$, $x+y=1$, and M is at least one element selected from the group consisting of Co, Al, Mn, Fe, Ti, Si, Nb, Mo, W, and Zn). The parameter x in the general formula desirably satisfies a condition $0.87 \leq x \leq 0.95$. The contents of the elements of the lithium-containing composite oxide may be measured using an inductively coupled plasma atomic emission spectroscopy device (ICP-AES), an electron probe microanalyzer (EPMA), an energy-dispersive X-ray analyzer (EDX), or the like.

As the conductive agent contained in the positive electrode mixture layer, there may be exemplified carbon materials such as carbon black such as acetylene black and Ketjenblack, graphite, carbon nanotubes (CNT), carbon nanofiber, graphene or the like. As the CNT, there may be exemplified a single-walled carbon nanotube (SWCNT) and a multi-walled carbon nanotube (MWCNT). The SWCNT is a carbon nanostructure in which one layer of a graphene sheet forms one circular tubular shape, and the multi-walled carbon nanotube is a carbon nanostructure in which two or more layers of the graphene sheet are layered in a concentric circular shape to form one circular cylindrical shape. The graphene sheet refers to a layer in which carbon atoms of sp2 hybrid orbit forming the crystal of graphite are positioned at vertices of a regular hexagon. No particular limitation is imposed on the shape of the carbon nanotube. For example, the carbon nanotubes may have various forms including a needle shape, a circular cylindrical tube shape, a fishbone (or cup-stacked) shape, a playing card (platelet) shape, and a coil shape.

The positive electrode mixture layer desirably contains both of the SWCNT and MWCNT. With this configuration, even when the positive electrode mixture layer has a predetermined void fraction as will be described later, an electrically conductive path can be maintained in the positive electrode mixture layer.

A content of the SWCNT in the positive electrode mixture layer is, for example, greater than or equal to 0.0001% by mass and less than or equal to 0.02% by mass with respect to a total mass of the positive electrode active material. A content of the MWCNT in the positive electrode mixture layer is, for example, greater than or equal to 0.01% by mass and less than or equal to 0.5% by mass with respect to the total mass of the positive electrode active material.

A surface area per unit mass of the SWCNT is, for example, greater than or equal to 300 m$^2$/g. A surface area per unit mass of the MWCNT is, for example, greater than or equal to 200 m$^2$/g. Upper limit values of the surface areas per unit mass of the SWCNT and the MWCNT are not particularly limited, and are, for example, 10000 m$^2$/g.

The SWCNT and the MWCNT desirably substantially do not contain a metal catalyst in a tube. With a metal catalyst, the positive electrode 11 may be degraded, and the characteristics of the secondary battery may consequently be degraded. Here, substantially not containing a metal catalyst means that the SWCNT and the MWCNT contain the metal catalyst in an amount corresponding to the detection limit of ICP-AES or less.

The positive electrode mixture layer may contain at least one of hydrogenated nitrile butadiene rubber (HNBR) or a cellulose derivative. The HMBR and the cellulose derivative function also as a dispersant, and suppress aggregation of CNTs in the positive electrode mixture slurry.

As the binder contained in the positive electrode mixture layer, there may be exemplified a fluororesin such as polytetrafluoroethylene (PTFE), polyvinylidene fluoride (PVDF), or the like, polyacrylonitrile (PAN), polyimide, an acrylic resin, polyolefin, or the like. Alternatively, these resins may be employed along with carboxy methyl cellulose (CMC) or a salt thereof, polyethylene oxide, or the like.

An area A [m$^2$] of the positive electrode mixture layer and a discharge capacity B [Ah] when the battery is discharged from a charged state of 4.2V with 0.05C until 2.5V desirably satisfy a relationship $B/A \geq 40$ Ah/m$^2$. This result is a result under a temperature environment of 25°C, and the secondary battery is set to the charged state of 4.2V by charging the secondary battery with a constant current of 1C until the battery voltage becomes 4.2V, and then charging the secondary battery with a constant voltage of 4.2V until the current value becomes 0.02C. In addition, the area A of the positive electrode mixture layer is, for example, a total of an area of a front surface and an area of a back surface when the positive electrode mixture layer is provided both on the front surface side of the positive electrode core and the back surface of the positive electrode mixture layer.

[Negative Electrode]

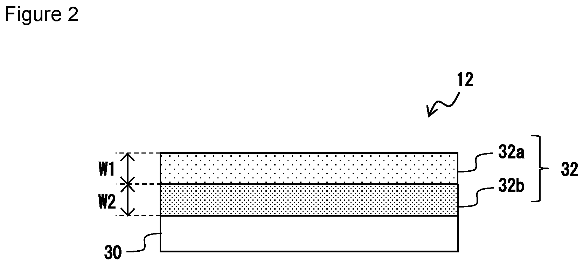

FIG. 2 is a cross-sectional diagram of the negative electrode 12 in an embodiment of the present disclosure. As illustrated in FIG. 2, the negative electrode 12 comprises a negative electrode core 30 and a negative electrode mixture layer 32 disposed on a surface of the negative electrode 12. The negative electrode mixture layer 32 comprises a first negative electrode mixture layer 32a disposed on the surface of the negative electrode 12, and a second negative electrode mixture layer 32b disposed between the first negative electrode mixture layer 32a and the negative electrode core 30. For the negative electrode core 30, there may be employed a foil of a metal stable within a potential range of the negative electrode 12 such as copper or the like, a film on a surface of which the metal is placed, or the like. The first negative electrode mixture layer 32a and the second negative electrode mixture layer 32b are desirably provided on both surfaces of the negative electrode core 30 except for a portion to which the negative electrode lead 21 is connected. The form of the negative electrode 12 is not limited to the example structure illustrated in FIG. 2, and, for example, a functional layer may be disposed between the second negative electrode mixture layer 32b and the negative electrode core 30.

A thickness W1 of the first negative electrode mixture layer 32a and a thickness W2 of the second negative electrode mixture layer 32b satisfy, for example, a condition $0.3 \leq W1/(W1+W2) \leq 0.7$. With this configuration, the battery capacity can be improved in addition to the output characteristics and the quick charge cycle characteristics.

The negative electrode mixture layer 32 contains, for example, a negative electrode active material and a binder. As the negative electrode active material contained in the negative electrode mixture layer 32, there may be exemplified graphite. The graphite may be a natural graphite such as flake graphite, or an artificial graphite such as massive artificial graphite, graphitized meso-phase carbon microbeads, or the like. A volume-based D50 of the graphite is, for example, greater than or equal to 1 $\mu$m and less than or equal to 30 $\mu$m. Alternatively, for the negative electrode active material, the natural graphite and the artificial graphite may be used in combination, or a mixture of two or more kinds of graphite having different values of D50 may be used.

A part of the graphite contained in the negative electrode mixture layer 32 is coated graphite in which a surface of graphite is coated with amorphous graphite. The amorphous graphite is a material with a high electrical conductivity, and the electrical conductivity of the graphite can be improved by coating the graphite with the amorphous graphite. In addition, the coated graphite is harder in comparison to normal, non-coated graphite. The coated graphite can be formed, for example, through CVD using acetylene, methane, or the like, or a method of mixing a coal pitch, a petroleum pitch, a phenol resin, or the like with graphite, and applying a thermal treatment. A thickness of an electrically conductive layer is not particularly limited, but is, for example, greater than or equal to 1 nm and less than or equal to 200 nm, in consideration of securing the electrical conductivity and diffusivity of Li ions into the particles. The thickness of the electrically conductive layer can be measured through observation of a cross section of a composite material using the SEM or a transmission electron microscope (TEM). The coated graphite may contain the elemental sulfur due to the production method thereof. In general, normal graphite does not contain elemental sulfur. Because of this, as a method of checking an existence ratio between the coated graphite and the normal graphite, it would be effective to check the existence of the elemental sulfur with the EDX (energy-dispersive fluorescent X-ray analyzer) or EPMA (electron probe microanalyzer). Depending on the thickness of the coated graphite, due to differences in the crystallinity between the coated portion and the non-coated portion, an intensity ratio between a G band and a D band (GD ratio) in the Raman spectroscopy differs, and thus, mapping of the GD ratio may sometimes be also effective.

A ratio P1 of the coated graphite with respect to a total mass of graphite in the first negative electrode mixture layer 32a and a ratio P2 of the coated graphite with respect to a total mass of graphite in the second negative electrode mixture layer 32b satisfy a relationship P1 > P2. With this configuration, higher output and superior quick charge cycle characteristics can both be achieved. In the rolling process performed during production of the negative electrode 12, the coated graphite is harder to break, and the void fraction of the first negative electrode mixture layer 32a thus becomes higher. In addition, due to superior electrical conductivity of the coated graphite, an electrically conductive path is secured in the first negative electrode mixture layer 32a. The second negative electrode mixture layer 32b has a lower void fraction in comparison to the first negative electrode mixture layer 32a, and thus, the battery capacity can be improved.

P1 is desirably greater than or equal to 80% by mass. An upper limit value of P1 is, for example, 100% by mass. P2 is desirably less than or equal to 20% by mass. A lower limit value of P2 is, for example, 0% by mass.

The negative electrode mixture layer 32 may contain a silicon-containing material, serving as a negative electrode active material. With this configuration, a higher battery capacity can be realized. Because a volume of the silicon-containing material changes more significantly during charging and discharging in comparison to the carbon material, when the negative electrode mixture layer 32 contains the silicon-containing material, uneven distribution of the non-aqueous electrolyte tends to more easily occur in the negative electrode mixture layer 32. However, by optimizing the structures of the positive electrode 11 and the negative electrode 12 as described above, the unevenness of the distribution of the non-aqueous electrolyte can be suppressed, and the quick charge cycle characteristics can be improved. A content of the silicon-containing material in the negative electrode mixture layer 32 is, for example, greater than or equal to 5% by mass with respect to a total mass of the negative electrode active material contained in the negative electrode mixture layer 32. An upper limit value of the content of the silicon-containing material is not particularly limited, and is, for example, 30% by mass. A content of the silicon-containing material in the first negative electrode mixture layer 32a and a content of the silicon-containing material in the second negative electrode mixture layer 32b may differ from each other or may be the same.

It is sufficient that the silicon-containing material is a material containing Si, and examples include Si particles, a silicon alloy, a silicon compound, and a composite material containing Si. D50 of the composite material containing Si is generally smaller than D50 of graphite. The volume-based D50 of the composite material is, for example, greater than or equal to 1 $\mu$m and less than or equal to 15 $\mu$m. As the silicon-containing material, one material may be used as a single entity, or two or more materials may be used in combination.

A desirable silicon-containing material (the composite material described above) is a composite particle including an ion conductive phase, and a Si phase dispersed in the ion conductive phase. The ion conductive phase is, for example, at least one selected from the group consisting of a silicate phase, a carbon phase, a silicide phase, and a silicon oxide phase. The silicide phase is a phase of a compound formed from Si and an element which is more electrically positive than Si, and examples include $NiSi$, $Mg_2Si$, $TiSi_2$, or the like. The Si phase is formed by Si being dispersed in a small particle form. The ion conductive phase is a continuous phase formed from a group of particles smaller than the Si phase.

An average value of a size of the Si phase is desirably greater than or equal to 1 nm and less than or equal to 200 nm, and is more desirably greater than or equal to 1 nm and less than or equal to 100 nm. The average size of the Si phase is calculated by capturing an SEM image of a particle cross section of the silicon-containing material, and averaging diameters of circumscribing circles of the Si phase extracted through image analysis. The average size of the Si phase may be, for example, greater than or equal to 1 nm and less than or equal to 10 nm. By reducing the size of the Si phase, it is possible to suppress particle expansion percentage due to charging and discharging, while maintaining a high capacity.

The composite material described above may have an electrically conductive layer which covers a surface of the ion conductive phase. The electrically conductive layer is formed from a material having a higher electrical conductivity in comparison to the ion conductive layer, and forms a superior electrically conductive path in the negative electrode mixture layer. The electrically conductive layer is, for example, a carbon coating formed from an electrically conductive carbon material. As the electrically conductive carbon material, carbon black such as acetylene black and Ketjenblack, graphite, amorphous carbon having a low crystallinity (amorphous carbon), or the like may be employed. A thickness of the electrically conductive layer is desirably greater than or equal to 1 nm and less than or equal to 200 nm, and is more desirably greater than or equal to 5 nm and less than or equal to 100 nm in consideration of securing the electrical conductivity and diffusivity of Li ions into the particle. The thickness of the electrically conductive layer can be measured through observation of the cross section of the composite material using the SEM or the transmissive electron microscope (TEM).

An example of a desirable composite material containing Si is a composite particle having a sea-island structure in which small Si is approximately uniformly dispersed in an amorphous silicon oxide phase, and which is represented by a general formula $SiO_x$ (wherein $0.5 \leq x \leq 1.5$) as a whole. The primary component of the silicon oxide may be silicon dioxide. Further, the silicon oxide phase may be doped with Li.

Another example of a desirable composite material containing Si is a composite particle having the sea-island structure in which small Si is approximately uniformly dispersed in an amorphous silicate phase. The silicate phase contains, for example, at least one element selected from the group consisting of group 1 and group 2 elements of the periodic table. The silicate phase may further contain at least one element selected from the group consisting of B, Al, Zr, Nb, Ta, V, La, Y, Ti, P, Bi, Zn, Sn, Pb, Sb, Co, Er, F, and W.

A desirable silicate phase is a lithium silicate phase containing Li. The lithium silicate phase is a phase of a composite oxide represented by general formula $Li_{2z}SiO_{(2+z)}$ (wherein $0 < z < 2$). The lithium silicate phase desirably does not include $Li_4SiO_4$ ($Z=2$). Because $Li_4SiO_4$ is an unstable compound, and reacts with water to exhibit alkaline characteristics, $Li_4SiO_4$ may alter Si and may cause degradation of the charge and discharge capacity. The lithium silicate phase desirably has $Li_2SiO_3$ ($Z=1$) or $Li_2Si_2O_5$ ($Z=1/2$) as the primary component, from the viewpoints of stability, productivity, Li ion conductivity, and the like.

Another example of a desirable composite material containing Si is a composite particle having the sea-island structure in which small Si is approximately uniformly dispersed in a carbon phase. It is desirable that, in at least a part of the silicon-containing material, the ion conductive phase is a carbon phase. The carbon phase is desirably an amorphous carbon phase. The carbon phase may contain a crystalline phase component, but desirably has a larger amount of the amorphous phase component. The amorphous carbon phase is formed from, for example, a carbon material having an average plane spacing of a (002) plane measured through an X-ray diffraction method of greater than 0.34 nm. The composite material including the carbon phase may have an electrically conductive layer separate from the carbon phase, or may have no such an electrically conductive layer.

As the binder contained in the negative electrode mixture layer 32, there may be exemplified, for example, styrene butadiene rubber (SBR), nitrile-butadiene rubber (NBR), a fluororesin such as polytetrafluoroethylene (PTFE), polyvinylidene fluoride (PVDF), or the like, polyacrylonitrile (PAN), polyimide, an acrylic resin, polyolefin, and the like. Of these, SBR and NBR are desirable, and SBR is particularly desirable. One of these binders may be used as a single entity or a combination of two or more of these binders may be used in combination. The binder contained in the first negative electrode mixture layer 32a and the binder contained in the second negative electrode mixture layer 32b may differ from each other, or may be the same.

The negative electrode mixture layer 32 may further contain a thickener. As the thickener, there may be exemplified, for example, carboxy methyl cellulose (CMC) or a salt thereof (CMC-Na or the like), polyacrylic acid (PAA) or a salt thereof (PAA-Na, PAA-K, or the like, or a partially neutralized salt), and polyvinyl alcohol (PVA). One of these thickeners may be used as a single entity, or two or more of these thickeners may be used in combination. The thickener contained in the first negative electrode mixture layer 32a and the thickener contained in the second negative electrode mixture layer 32b may differ from each other, or may be the same.

The negative electrode mixture layer 32 may further contain a conductive agent. The conductive agent is desirably a single-walled carbon nanotube (SWCNT). The negative electrode mixture layer 32 has a relatively large void fraction, and, in particular, in the first negative electrode mixture layer 32a having a larger void fraction in comparison to the second negative electrode mixture layer 32b, the electrically conductive path tends to be easily cut, but by adding the SWCNT, the electrically conductive path can be maintained. A content of the SWCNT in the negative electrode mixture layer 32 is desirably greater than or equal to 0.001% by mass and less than or equal to 0.03% by mass with respect to a total mass of the negative electrode active material from the viewpoint of achieving both maintaining the electrically conductive path and suppressing aggregation of the SWCNT.

[Separator]

For the separator 13, a porous sheet having ion permeability and an insulating property is employed. Specific examples of the porous sheet include a microporous thin film, a woven fabric, a non-woven fabric, or the like. As a material forming the separator 13, desirably, polyolefin such as polyethylene and polypropylene, cellulose, or the like is employed. The separator 13 may have a single-layer structure or a multilayer structure. On a surface of the separator 13, a resin layer of a high heat resistivity, such as an aramid resin, or the like, may be formed.

A filler layer containing a filler of inorganic materials may be formed at an interface between the separator 13 and the positive electrode 11 and/or at an interface between the separator 13 and the negative electrode 12. As the filler of the inorganic materials, there may be exemplified oxides containing metal elements such as Ti, Al, Si, Mg, or the like, a phosphate compound, or the like. The filler layer can be formed by applying a slurry containing the filler on a surface of the positive electrode 11, the negative electrode 12, or the separator 13.

[Secondary Battery at time of Discharge]

In the present disclosure, under a temperature environment of 25°C, a secondary battery is charged with a constant current of 1C until the battery voltage becomes 4.2V, is then charged with a constant voltage of 4.2V until the current value becomes 0.02C, and is then discharged with a constant current of 1C until the battery voltage becomes 2.5V. The secondary battery in this state is taken as the secondary battery at the time of discharge. The characteristics of the positive electrode 11, the negative electrode 12, and the separator 13 are obtained by dismantling the secondary battery at the time of discharge to extract the positive electrode 11, the negative electrode 12, and the separator 13, and taking measurements of these components.

A void fraction Vc of the positive electrode mixture layer at the time of discharge and a void fraction Va of the negative electrode mixture layer at the time of discharge satisfy a relationship Va - Vc < 13%. Vc is, for example, greater than or equal to 22%. An upper limit value of Vc is not particularly limited, and is, for example, 40%. Va is, for example, greater than or equal to 28%. An upper limit value of Va is not particularly limited, and is, for example, 45%.

The void fraction of the positive electrode mixture layer is a two-dimensional value determined from a ratio of areas of voids with respect to a cross-sectional area of the positive electrode mixture layer in a cross section of the positive electrode mixture layer. More specifically, the void fraction of the positive electrode mixture layer can be calculated through the following procedure. The void fraction of the negative electrode mixture layer can be calculated through a similar procedure.

<Measurement Method of Void Fraction>

(1) A cross section of the positive electrode mixture layer is exposed. As a method of exposing the cross section, for example, a method may be employed in which a part of the positive electrode mixture layer is cut and machined with an ion milling apparatus (for example, IM4000PLUS manufactured by Hitachi High-Tech Corporation), and the cross section of the positive electrode mixture layer is exposed.

(2) Using a scanning electron microscope, a backscattered electron image of the exposed cross section of the positive electrode mixture layer is captured. Magnification when the backscattered electron image is captured is, for example, 800 times.

(3) A cross-sectional image obtained by the above-described process is read into a computer, a binarization process is applied using an image analyzing software (such as, for example, ImageJ manufactured by National Institutes of Health), and a binarized image is obtained in which particle cross sections in the cross-sectional image are converted into black color, and voids existing in the particle cross section are converted into white color.

(4) In the binarized image obtained as described above, an area of the voids is calculated by counting, as the voids, portions, among the voids converted into the white color, other than voids inside the graphite particles (pores not connected to the surface of the particle) and pores connected to the surface of the graphite particle, but having a width of less than or equal to 3 $\mu$m. The void fraction is calculated based on the following equation.

Void Fraction (%) = (Area of voids)/(area of negative electrode mixture layer cross section) * 100

(5) The calculation of the void fraction through (3) and (4) described above is performed for 3 times, and an average value of these void fractions is set as the void fraction of the positive electrode mixture layer.

A tortuosity $\tau$ of the negative electrode mixture layer at the time of discharge is desirably less than or equal to 2.5. The tortuosity of the negative electrode mixture layer is an indication indicating a degree of curvature of the voids (pores) formed in the negative electrode mixture layer and through which the non-aqueous electrolyte passes, and a smaller tortuosity means a smaller curvature of the path of the voids. The tortuosity is a value obtained by dividing a path distance (path length) from a starting point to a completing point of the voids of the mixture layer by a straight line distance from the starting point to the completing point of the voids of the mixture layer. When the path length is equal to the straight line distance from the starting point to the completing point of the voids of the mixture layer, the tortuosity is 1.

The tortuosity of the negative electrode mixture layer is calculated by the following equation. In the equation, $\tau$ represents the tortuosity, f represents a path length through which a medial axis, which penetrates through surfaces which oppose each other in a thickness direction, passes (hereinafter simply referred to as a "path length"), and s represents a length of a straight line connecting a starting point and a completing point of the path of f (hereinafter simply referred to as a "straight line distance between starting and completing points").

$$\tau = f/s$$

The path length and the straight line distance described above can be determined through cross section observation and image analysis of the negative electrode mixture layer using a 3D scanning electron microscope (3DSEM; for example, Ethos NX-5000 manufactured by Hitachi High-Tech Corporation). A specific method of calculating the tortuosity is as follows.

<Measurement Method of Tortuosity>

(1) The negative electrode mixture layer is placed on a sample stage of the 3DSEM, and continuous cross section slicing and cross section observation are alternately performed. The observation is performed with an acceleration voltage of 5 kV. The obtained two-dimensional continuous image is binarized with a three-dimensional image analysis software (for example, EX FACT VR manufactured by Nihon Visual Science, Inc.), and the resulting binarized images are spliced, to construct a three-dimensional structure. The three-dimensional structure desirably is greater than or equal to 100 $\mu$m x 100 $\mu$m x 100 $\mu$m.

(2) The image of the three-dimensional structure obtained in (1) is binarized, to extract voids. The obtained voids are made into narrow lines, to determine an axis passing through the center of the void (medeial axis). Of the medial axes existing in a cube, a medial axis which penetrates through the surface of the core in a vertical direction is extracted, and a shortest path of a path having branches in one path is determined as a path length (f) of the negative electrode mixture layer.

(3) Using the average path length (f) of the negative electrode mixture layer obtained in (2) and an average straight line distance (s) connecting the path, the tortuosity of the negative electrode mixture layer is calculated from the above-described equation.

The thickness of the separator at the time of discharge is less than or equal to 15 $\mu$m. This configuration results in a larger volume within the housing can being occupied by the positive electrode and the negative electrode, and the battery capacity can thus be improved. A lower limit value of the thickness of the separator at the time of discharge is, for example, 10 $\mu$m. When the thickness is lower than 10 $\mu$m, the strength of the separator is reduced, and safety cannot be secured from the viewpoint of prevention of short-circuiting.

EXAMPLES

The present disclosure will now be described in further detail with reference to Examples, but the present disclosure is not limited to these Examples.

<Example 1>

[Production of Positive Electrode]

As a positive electrode active material, a lithium-containing composite oxide represented by $LiNi_{0.88}Co_{0.09}Al_{0.03}O_2$ was used. The positive electrode active material, a single-walled carbon nanotube (SWCNT), a multi-walled carbon nanotube (MWCNT), polyvinylidene fluoride (PVDF), and hydrogenated nitrile butadiene rubber (HNBR) were mixed in a mass ratio of 100:0.01:0.1:1:0.1, and a positive electrode mixture slurry was prepared using N-methyl-2-pyrrolidone (NMP) as a dispersion medium. Next, the positive electrode mixture slurry was applied on a positive electrode core formed from an aluminum foil, the applied film was dried and compressed, and the positive electrode core was cut in a predetermined electrode size, to obtain a positive electrode on both surfaces of the positive electrode core of which the positive electrode mixture layers were disposed. An exposed portion in which a surface of the positive electrode core was exposed was provided at a part of the positive electrode. The SWCNT and MWCNT which were used substantially did not contain a metal catalyst. In addition, a surface area per unit mass of the SWCNT was 1000 $m^2$/g, and a surface area per unit mass of the MWCNT was 400 $m^2$/g.

[Production of Negative Electrode]

Coated graphite having a surface coated with amorphous graphite and Si particles were mixed with a mass ratio of 95:5, and the mixture was set as a first negative electrode active material. The first negative electrode active material, styrene butadiene rubber (SBR), carboxy methyl cellulose (CMC), and SWCNT were mixed with a mass ratio of 100:1:1:0.05, and a first negative electrode mixture slurry was prepared using water as the dispersion medium. The coated graphite contained S on the surface thereof. A second negative electrode mixture slurry was prepared in a manner similar to the first negative electrode mixture slurry, except that a second negative electrode active material obtained by mixing normal graphite and Si particles with a mass ratio of 95:5 was used in place of the first negative electrode active material.

The second negative electrode mixture slurry was applied on both surfaces of a negative electrode core formed from a copper foil through doctor blade method, and was dried, to form a second negative electrode mixture layer. Then, the first negative electrode mixture slurry was applied on the second negative electrode mixture layer, and was dried, to form a first negative electrode mixture layer. In this process, an application mass ratio per unit area between the first negative electrode mixture slurry and the second negative electrode mixture slurry was set at 4:6. The first negative electrode mixture layer and the second negative electrode mixture layer were rolled using a rolling roller, to produce a negative electrode. A value of T1/(T1+T2) calculated from a thickness W1 of the first negative electrode mixture layer and a thickness W2 of the second negative electrode mixture layer was 0.4. An exposed portion in which a surface of the negative electrode core was exposed was provided at a part of the negative electrode.

[Preparation of Non-aqueous Electrolyte (Electrolyte Solution)]

Into a mixture solvent of ethylene carbonate (EC), ethylmethyl carbonate (EMC), and dimethyl carbonate (DMC) mixed with a volume ratio (at 25°C) of 3:3:4, $LiPF_6$ was dissolved with a concentration of 1.2 mol/liter, to prepare a non-aqueous electrolyte.

[Production of Test Cell (Secondary Battery)]

An aluminum lead was attached to the exposed portion of the positive electrode, and a nickel lead was attached to the exposed portion of the negative electrode. The positive electrode and the negative electrode were wound in a spiral shape with a separator made of polyolefin therebetween, to produce a wound-type electrode assembly. A diameter of the electrode assembly was 21 mm, and a height of the electrode assembly was 70 mm. Insulating plates were disposed respectively above and below the electrode assembly, and the electrode assembly was housed within a housing can. The negative electrode lead was welded to the bottom of the housing can having a circular cylindrical shape with a bottom, and the positive electrode lead was welded to the sealing assembly. The electrolyte solution was injected into the housing can, and an opening of the housing can was sealed with the sealing assembly via a gasket, to thereby produce a secondary battery serving as a test cell. In the secondary battery, a value of B/A obtained from a positive electrode area A [m$^2$] and a discharge capacity B [Ah] when the battery was discharged from a charged state of 4.2V with 0.05C until 2.5V was 42.4 h/m$^2$.

[Evaluation of Direct Current Resistance (DCR)]

Under a temperature environment of 25°C, the test cell was charged with a constant current of 1C until a battery voltage became 4.2V, and then charged with a constant voltage of 4.2V until a current value became 0.02C. Then, the cell was discharged with a constant current of 1C until the battery voltage became 2.5V, and a discharge capacity was measured. From a result of the discharge capacity, a charge depth (SOC) of the battery was adjusted to 50%. The cell was then discharged with a current of 1C for 10 seconds, and an amount of change of voltage $\Delta V$ after the elapse of 10 seconds was measured. From the amount of change of voltage $\Delta V$ due to the discharge and an amount of current, a direct current resistance DCR was determined. Here, C(A) = rated capacity (Ah)/1 (h).

$$DCR = \Delta V/1C$$

[Evaluation of Quick Charge Cycle Characteristics (Capacity Maintenance Percentage after Cycle Test)]

Under a temperature environment of 25°C, the test cell was charged with a constant current of 1C until the battery voltage became 4.2V, and then charged with a constant voltage of 4.2V until the current value became 0.02C. Then, the cell was discharged with a constant current of 1C until the battery voltage became 2.5V. With these charging and discharging as one cycle, 150 cycles of charging and discharging were performed, and a capacity maintenance percentage was calculated with the following equation based on the discharge capacity at the 1st cycle and the discharge capacity at the 150th cycle. Larger capacity maintenance percentage means better charge/discharge cycle characteristics.

Capacity Maintenance Percentage (%) = (Discharge capacity at 150th cycle)/(discharge capacity at 1st cycle)

[Evaluation of Characteristics of Secondary Battery at time of Discharge]

Under a temperature environment of 25°C, the test cell was charged with a constant current of 1C until the battery voltage became 4.2V, and then charged with a constant voltage of 4.2V until the current value became 0.02C. Then, the cell was discharged with a constant current of 1C until the battery voltage became 2.5V, to thereby obtain a secondary battery at the time of discharge. The secondary battery was dismantled, and the positive electrode 11, the negative electrode 12, and the separator 13 were analyzed.

A void fraction Vc of the positive electrode mixture layer at the time of discharge was 26.6%, and a voltage fraction Va of the negative electrode mixture layer at the time of discharge was 36.5%. A tortuosity $\tau$ of the negative electrode mixture layer at the time of discharge was 1.8. A thickness of the separator at the time of discharge was 15 $\mu$m.

<Example 2>

A test cell was produced in a manner similar to Example 1, except that, in the production of the negative electrode, the graphite used for the second negative electrode active material was changed to a mixture in which the coated graphite and the normal graphite were mixed with a mass ratio of 50:50, and was evaluated.

<Example 3>

A test cell was produced in a manner similar to Example 1, except that, in the production of the negative electrode, the graphite used for the first negative electrode active material was changed to a mixture in which the coated graphite and the normal graphite were mixed with a mass ratio of 75:25, and was evaluated.

<Example 4>

A test cell was produced in a manner similar to Example 1, except that, in the production of the negative electrode, the graphite used for the first negative electrode active material was changed to a mixture in which the coated graphite and the normal graphite were mixed with a mass ratio of 50:50, and was evaluated.

<Example 5>

A test cell was produced in a manner similar to Example 1, except that, in the production of the positive active material, the positive electrode active material, the SWCNT, the MWCNT, PVDF, and HNBR were mixed with a mass ratio of 100:0.1:0.0001:1:0.1, and was evaluated.

<Example 6>

A test cell was produced in a manner similar to Example 1, except that, in the production of the positive active material, the positive electrode active material, the SWCNT, the MWCNT, PVDF, and HNBR were mixed with a mass ratio of 100:0.5:0.01:1:0.1, and was evaluated.

<Example 7>

A test cell was produced in a manner similar to Example 1, except that, in the production of the positive active material, the positive electrode active material, the SWCNT, the MWCNT, PVDF, and HNBR were mixed with a mass ratio of 100:0.1:0.02:1:0.1, and was evaluated.

<Example 8>

A test cell was produced in a manner similar to Example 1, except that, in the production of the positive active material, the positive electrode active material, the SWCNT, the MWCNT, PVDF, and HNBR were mixed with a mass ratio of 100:0.01:0.01:1:0.1, and was evaluated.

<Comparative Example 1>

A test cell was produced in a manner similar to Example 1, except that, in the production of the positive electrode active material, the conductive agent is changed to acetylene black (AB), and the positive electrode active material, AB, and PVDF were mixed with a mass ratio of 100:1:1, and was evaluated.

<Comparative Example 2>

A test cell was produced in a manner similar to Example 1, except that, in the production of the positive electrode active material, the SWCNT was not used, and the positive electrode active material, the MWCNT, PVDF, and HNBR were mixed with a mass ratio of 100:0.5:1:0.2, and was evaluated.

<Comparative Example 3>

A test cell was produced in a manner similar to Example 1, except that, in the production of the negative electrode, the graphite used for the first negative electrode active material was changed to normal graphite, and the graphite used for the second negative electrode active material was changed to coated graphite, and was evaluated.

<Comparative Example 4>

A test cell was produced in a manner similar to Example 1, except that, in the production of the negative electrode, the graphite used for the second negative electrode active material was changed to coated graphite, and was evaluated.

<Comparative Example 5>

A test cell was produced in a manner similar to Example 1, except that, in the production of the negative electrode, the graphite used for the first negative electrode active material was changed to normal graphite, and was evaluated.

Evaluation results of the test cells of Examples and Comparative Examples are shown in TABLE 1. In TABLE 1, the DCRs and the capacity maintenance percentages of the test cells of Examples 1 to 8 and Comparative Examples 2 to 5 are relative values with the DCR and the capacity maintenance percentage, respectively, of the test cell of Comparative Example 1 as being a value of "100". In addition, values of Va - Vc for the test cells are shown in TABLE 1. Further, in the table, whether or not P1 > P2 is satisfied in the test cells is shown with "∘" (satisfied) and "X" (not satisfied).

[TABLE 1]

| | POSITIVE ELECTRODE | NEGATIVE ELECTRODE | | P1>P2 | Va [%] | Vc [%] | Va-Vc [%] | EVALUATION RESULT | |
| | CONDUCTIVE AGENT | FIRST LAYER | SECOND LAYER | | | | | DCR | CAPACITY MAINTENANCE PERCENTAGE |
|---|---|---|---|---|---|---|---|---|---|
| EXAMPLE 1 | SWCNT +MWCNT | COATED GRAPHITE100% | NORMAL GRAPHITE100% | ○ | 36.5 | 26.6 | 9.9 | 94.6 | 107.5 |
| EXAMPLE 2 | SWCNT +MWCNT | COATED GRAPHITE100% | COATED GRAPHITE50% NORMAL GRAPHITE50% | ○ | 36.5 | 26.6 | 9.9 | 93.5 | 106.2 |
| EXAMPLE 3 | SWCNT +MWCNT | COATED GRAPHITE75% NORMAL GRAPHITE25% | NORMAL GRAPHITE 100% | ○ | 36.5 | 26.6 | 9.9 | 94.8 | 106.7 |
| EXAMPLE 4 | SWCNT +MWCNT | COATED GRAPHITE50% NORMAL GRAPHITES0% | NORMAL GRAPHITE100% | ○ | 36.5 | 26.6 | 9.9 | **95.4** | 106.2 |
| EXAMPLE 5 | SWCNT +MWCNT | COATED GRAPHITE100% | NORMAL GRAPHITE 100% | ○ | 37.4 | 27.6 | 9.8 | 95.7 | 107.9 |
| EXAMPLE 6 | SWCNT +MWCNT | COATED GRAPHITE100% | NORMAL GRAPHITE100% | ○ | 36.8 | 24.8 | 12.0 | 92.6 | 105.6 |
| EXAMPLE 7 | SWCNT +MWCNT | COATED GRAPHITE100% | NORMAL GRAPHITE100% | ○ | 37.0 | 26.8 | 10.2 | 92.8 | 106.3 |
| EXAMPLE 8 | SWCNT +MWCNT | COATED GRAPHITE100% | NORMAL GRAPHITE100% | ○ | 37.1 | 27.5 | 9.6 | 96.0 | 106.2 |
| COMPARATIVE EXAMPLE 1 | AB | COATED GRAPHITE100% | NORMAL GRAPHITE100% | ○ | 40.0 | 24.3 | 15.7 | 100.0 | 100.0 |
| COMPARATIVE EXAMPLE 2 | MWCNT | COATED GRAPHITE100% | NORMAL GRAPHITE100% | ○ | 38.2 | 25.2 | 13.0 | 99.5 | 102.2 |
| COMPARATIVE EXAMPLE 3 | SWCNT +MWCNT | NORMAL GRAPHITE100% | COATED GRAPHITE100% | X | 38.5 | 26.6 | 11.9 | 94.0 | 95.5 |

| | POSITIVE ELECTRODE | NEGATIVE ELECTRODE | | P1>P2 | Va [%] | Vc [%] | Va-Vc [%] | EVALUATION RESULT | |
|---|---|---|---|---|---|---|---|---|---|
| | CONDUCTIVE AGENT | FIRST LAYER | SECOND LAYER | | | | | DCR | CAPACITY MAINTENANCE PERCENTAGE |
| COMPARATIVE EXAMPLE 4 | SWCNT +MWCNT | COATED GRAPHITE100% | COATED GRAPHITE100% | X | 38.5 | 26.6 | 11.9 | 97.3 | 102.8 |
| COMPARATIVE EXAMPLE 5 | SWCNT +MWCNT | NORMAL GRAPHITE100% | NORMAL GRAPHITE100% | X | 38.6 | 26.6 | 12.0 | 98.1 | 102.8 |

In TABLE 1, all of the test cells of Examples had smaller DCRs and higher capacity maintenance percentages in comparison to the test cells of Comparative Examples. Based on the results described above, it can be understood that the non-aqueous electrolyte secondary battery of the present disclosure can achieve both higher output and superior quick charge cycle characteristics.

The present disclosure is further described with following embodiment.

Configuration 1:

A non-aqueous electrolyte secondary battery comprising:

a positive electrode;
a negative electrode;
a separator; and
a non-aqueous electrolyte, wherein
the positive electrode comprises a positive electrode core, and a positive electrode mixture layer disposed on a surface of the positive electrode core,
the positive electrode mixture layer contains a positive electrode active material, single-walled carbon nanotubes, and multi-walled carbon nanotubes,
the negative electrode comprises a negative electrode core, and a negative electrode mixture layer disposed on a surface of the negative electrode core,
the negative electrode mixture layer comprises a first negative electrode mixture layer disposed on a surface of the negative electrode, and a second negative electrode mixture layer disposed between the first negative electrode mixture layer and the negative electrode core,
the negative electrode mixture layer contains graphite, and a part of the graphite is coated graphite in which a surface of the graphite is coated with amorphous graphite,
a ratio P1 of the coated graphite with respect to a total mass of the graphite in the first negative electrode mixture layer and a ratio P2 of the coated graphite with respect to a total mass of the graphite in the second negative electrode mixture layer satisfy a relationship $P1 > P2$, and
a void fraction Vc of the positive electrode mixture layer at a time of discharge and a void fraction Va of the negative electrode mixture layer at a time of discharge satisfy a relationship $Va - Vc < 13\%$.

Configuration 2:

The non-aqueous electrolyte secondary battery according to configuration 1, wherein
the Vc is greater than or equal to 22%.

Configuration 3:

The non-aqueous electrolyte secondary battery according to configuration 1 or 2, wherein
the Va is greater than or equal to 28%.

Configuration 4:

The non-aqueous electrolyte secondary battery according to any one of configurations 1 to 3, wherein
a tortuosity of the negative electrode mixture layer at a time of discharge is less than or equal to 2.5.

Configuration 5:

The non-aqueous electrolyte secondary battery according to any one of configurations 1 to 4, wherein
a thickness of the separator at a time of discharge is less than or equal to 15 $\mu$m.

Configuration 6:

The non-aqueous electrolyte secondary battery according to any one of configurations 1 to 5, wherein
the coated graphite contains elemental sulfur.

Configuration 7:

The non-aqueous electrolyte secondary battery according to any one of configurations 1 to 6, wherein

a content of the single-walled carbon nanotubes in the positive electrode mixture layer is greater than or equal to 0.0001% by mass and less than or equal to 0.02% by mass with respect to a total mass of the positive electrode active material, and
a content of the multi-walled carbon nanotubes in the positive electrode mixture layer is greater than or equal to 0.01% by mass and less than or equal to 0.5% by mass with respect to the total mass of the positive electrode active material.

Configuration 8:

The non-aqueous electrolyte secondary battery according to any one of configurations 1 to 7, wherein

the negative electrode mixture layer contains a silicon-containing material, and
a content of the silicon-containing material in the negative electrode mixture layer is greater than or equal to 5% by mass with respect to a total mass of a negative electrode active material contained in the negative electrode mixture layer.

Configuration 9:

The non-aqueous electrolyte secondary battery according to any one of configurations 1 to 8, wherein the P1 is greater than or equal to 80% by mass.

Configuration 10:

The non-aqueous electrolyte secondary battery according to any one of configurations 1 to 9, wherein the P2 is less than or equal to 20% by mass.

Configuration 11:

The non-aqueous electrolyte secondary battery according to any one of configurations 1 to 10, wherein an area A $[m^2]$ of the positive electrode mixture layer and a discharge capacity B [Ah] when the secondary battery is discharged from a charged state of 4.2V with 0.05C until 2.5V satisfy a relationship $B/A \geq 40$ Ah/$m^2$.

Configuration 12:

The non-aqueous electrolyte secondary battery according to any one of configurations 1 to 11, wherein a thickness W1 of the first negative electrode mixture layer and a thickness W2 of the second negative electrode mixture layer satisfy a relationship $0.3 \leq W1/(W1+W2) \leq 0.7$.

Configuration 13:

The non-aqueous electrolyte secondary battery according to any one of configurations 1 to 12, wherein the positive electrode mixture layer contains at least one of hydrogenated nitrile butadiene rubber or a cellulose derivative.

Configuration 14:

The non-aqueous electrolyte secondary battery according to any one of configurations 1 to 13, wherein

a surface area per unit mass of the single-walled carbon nanotubes is greater than or equal to 300 $m^2$/g, and
a surface area per unit mass of the multi-walled carbon nanotubes is greater than or equal to 200 $m^2$/g.

Configuration 15:

The non-aqueous electrolyte secondary battery according to any one of configurations 1 to 14, wherein the single-walled carbon nanotubes and the multi-walled carbon nanotubes substantially do not contain a metal catalyst in a tube.

Configuration 16:

The non-aqueous electrolyte secondary battery according to any one of configurations 1 to 15, wherein the positive electrode and the negative electrode form an electrode assembly in which the positive electrode and the negative electrode are wound with the separator therebetween.

Configuration 17:

The non-aqueous electrolyte secondary battery according to configuration 16, wherein a diameter D of the electrode assembly and a height H of the electrode assembly satisfy a condition $H/D \geq 2$.

REFERENCE SIGNS LIST

10 non-aqueous electrolyte secondary battery, 11 positive electrode, 12 negative electrode, 13 separator, 14 electrode assembly, 16 housing can, 17 sealing assembly, 18, 19 insulating plate, 20 positive electrode lead, 21 negative electrode lead, 22 groove portion, 23 internal terminal plate, 24 lower vent member, 25 insulating member, 26 upper vent member, 27 cap, 28 gasket, 30 negative electrode core, 32 negative electrode mixture layer, 32a first negative electrode mixture layer, 32b second negative electrode mixture layer.

**Claims**

1. A non-aqueous electrolyte secondary battery comprising:

   a positive electrode;
   a negative electrode;
   a separator; and
   a non-aqueous electrolyte, wherein
   the positive electrode comprises a positive electrode core, and a positive electrode mixture layer disposed on a surface of the positive electrode core,
   the positive electrode mixture layer contains a positive electrode active material, single-walled carbon nanotubes, and multi-walled carbon nanotubes,
   the negative electrode comprises a negative electrode core, and a negative electrode mixture layer disposed on a surface of the negative electrode core,
   the negative electrode mixture layer comprises a first negative electrode mixture layer disposed on a surface of the negative electrode, and a second negative electrode mixture layer disposed between the first negative electrode mixture layer and the negative electrode core,
   the negative electrode mixture layer contains graphite, and a part of the graphite is coated graphite in which a surface of the graphite is coated with amorphous graphite,
   a ratio P1 of the coated graphite with respect to a total mass of the graphite in the first negative electrode mixture layer and a ratio P2 of the coated graphite with respect to a total mass of the graphite in the second negative electrode mixture layer satisfy a relationship P1 > P2, and
   a void fraction Vc of the positive electrode mixture layer at a time of discharge and a void fraction Va of the negative electrode mixture layer at a time of discharge satisfy a relationship Va - Vc < 13%.

2. The non-aqueous electrolyte secondary battery according to claim 1, wherein the Vc is greater than or equal to 22%.

3. The non-aqueous electrolyte secondary battery according to claim 1, wherein the Va is greater than or equal to 28%.

4. The non-aqueous electrolyte secondary battery according to claim 1, wherein a tortuosity $\tau$ of the negative electrode mixture layer at a time of discharge is less than or equal to 2.5.

5. The non-aqueous electrolyte secondary battery according to claim 1, wherein a thickness of the separator at a time of discharge is less than or equal to 15 $\mu$m.

6. The non-aqueous electrolyte secondary battery according to claim 1, wherein

the coated graphite contains elemental sulfur.

7. The non-aqueous electrolyte secondary battery according to claim 1, wherein

a content of the single-walled carbon nanotubes in the positive electrode mixture layer is greater than or equal to 0.0001% by mass and less than or equal to 0.02% by mass with respect to a total mass of the positive electrode active material, and
a content of the multi-walled carbon nanotubes in the positive electrode mixture layer is greater than or equal to 0.01% by mass and less than or equal to 0.5% by mass with respect to the total mass of the positive electrode active material.

8. The non-aqueous electrolyte secondary battery according to claim 1, wherein

the negative electrode mixture layer contains a silicon-containing material, and
a content of the silicon-containing material in the negative electrode mixture layer is greater than or equal to 5% by mass with respect to a total mass of a negative electrode active material contained in the negative electrode mixture layer.

9. The non-aqueous electrolyte secondary battery according to claim 1, wherein
the P1 is greater than or equal to 80% by mass.

10. The non-aqueous electrolyte secondary battery according to claim 1, wherein
the P2 is less than or equal to 20% by mass.

11. The non-aqueous electrolyte secondary battery according to claim 1, wherein
an area A [$m^2$] of the positive electrode mixture layer and a discharge capacity B [Ah] when the secondary battery is discharged from a charged state of 4.2V with 0.05C until 2.5V satisfy a relationship $B/A \geq 40$ Ah/$m^2$.

12. The non-aqueous electrolyte secondary battery according to claim 1, wherein
a thickness W1 of the first negative electrode mixture layer and a thickness W2 of the second negative electrode mixture layer satisfy a relationship $0.3 \leq W1/(W1+W2) \leq 0.7$.

13. The non-aqueous electrolyte secondary battery according to claim 1, wherein
the positive electrode mixture layer contains at least one of hydrogenated nitrile butadiene rubber or a cellulose derivative.

14. The non-aqueous electrolyte secondary battery according to claim 1, wherein

a surface area per unit mass of the single-walled carbon nanotubes is greater than or equal to 300 $m^2$/g, and
a surface area per unit mass of the multi-walled carbon nanotubes is greater than or equal to 200 $m^2$/g.

15. The non-aqueous electrolyte secondary battery according to claim 1, wherein
the single-walled carbon nanotubes and the multi-walled carbon nanotubes substantially do not contain a metal catalyst in a tube.

16. The non-aqueous electrolyte secondary battery according to claim 1, wherein
the positive electrode and the negative electrode form an electrode assembly in which the positive electrode and the negative electrode are wound with the separator therebetween.

17. The non-aqueous electrolyte secondary battery according to claim 16, wherein
a diameter D of the electrode assembly and a height H of the electrode assembly satisfy a condition $H/D \geq 2$.

Figure1

Figure 2

## INTERNATIONAL SEARCH REPORT

| International application No. |
| --- |
| **PCT/JP2024/029241** |

**A. CLASSIFICATION OF SUBJECT MATTER**

*H01M 10/058*(2010.01)i; *H01M 4/13*(2010.01)i; *H01M 4/133*(2010.01)i; *H01M 4/36*(2006.01)i; *H01M 4/38*(2006.01)i; *H01M 4/62*(2006.01)i
FI:  H01M10/058; H01M4/62 Z; H01M4/13; H01M4/133; H01M4/36 E; H01M4/38 Z

According to International Patent Classification (IPC) or to both national classification and IPC

**B. FIELDS SEARCHED**

Minimum documentation searched (classification system followed by classification symbols)

H01M10/058; H01M4/13; H01M4/133; H01M4/36; H01M4/38; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-131123 A (HITACHI, LTD.) 21 July 2016 (2016-07-21)<br>claims, paragraph [0031], examples | 1-17 |
| A | JP 2023-753 A (PRIMEARTH EV ENERGY CO., LTD.) 04 January 2023 (2023-01-04)<br>claims | 1-17 |
| A | CN 109449387 A (SHENZHEN ZHUONENG NEW ENERGY LIMITED BY SHARE LTD.)<br>08 March 2019 (2019-03-08)<br>entire text | 1-17 |

☐ Further documents are listed in the continuation of Box C.    ☑ See patent family annex.

| | |
| --- | --- |
| * Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **24 October 2024** | **05 November 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/029241**

| Patent document cited in search report | | | Publication date (day/month/year) | Patent family member(s) | Publication date (day/month/year) |
|---|---|---|---|---|---|
| JP | 2016-131123 | A | 21 July 2016 | US 2016/0268608 A1 claims, paragraph [0053], examples | |
| JP | 2023-753 | A | 04 January 2023 | (Family: none) | |
| CN | 109449387 | A | 08 March 2019 | (Family: none) | |

Form PCT/ISA/210 (patent family annex) (July 2022)

**REFERENCES CITED IN THE DESCRIPTION**

**Patent documents cited in the description**

- JP 6108166 B
- JP 6959010 B
- JP 7136017 B
- JP 7246810 B